(19) Europäisches Patentamt
European Patent Office
Office européen des brevets

(11) **EP 4 280 692 A1**

(12) **EUROPEAN PATENT APPLICATION**

(43) Date of publication:
**22.11.2023 Bulletin 2023/47**

(21) Application number: **23173546.5**

(22) Date of filing: **16.05.2023**

(51) International Patent Classification (IPC):
**H04W 40/10** (2009.01)

(52) Cooperative Patent Classification (CPC):
**H04W 40/10**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **16.05.2022 US 202217745092**

(71) Applicant: **Marvell Asia Pte Ltd
Singapore 369522 (SG)**

(72) Inventors:
• **Matthews, William Brad
Saratoga, CA 95070 (US)**
• **Kwan, Bruce H.
Sunnyvale, CA 94087 (US)**

(74) Representative: **Grünecker Patent- und
Rechtsanwälte
PartG mbB
Leopoldstraße 4
80802 München (DE)**

(54) **MANAGING POWER IN AN ELECTRONIC DEVICE**

(57) A network device accesses, from a queue corresponding to a port of the device, a packet for processing. The device identifies a present operating region (ORE) of one or more OREs specified for the device, an ORE being associated with at least one of (i) one or more device attributes, or (ii) one or more environmental factors associated with an environment in which the device is operational. The device determines a number of power credits available for processing one or more packets. In response to determining that the number of power credits available is non-negative, the device completes processing of the packet. The device computes, based at least on the present ORE, a power credit reduction for the packet, which corresponds to an amount of power for processing the packet, and reduces the number of power credits available by the power credit reduction for the packet.

FIG. 1

**Description**

BACKGROUND

This specification relates generally to managing power consumption in an electronic device, and in particular to managing throughput for power management in an electronic device.

Some electronic devices receive network packets through ingress ports of the devices, for forwarding through egress ports of the devices. In some cases, an electronic device temporarily stores packet data in buffers, before the packet data are forwarded to packet queues for transmission through the egress ports to external destinations.

SUMMARY

This specification describes packet processing in an electronic device having a number of innovative aspects and related technologies. The electronic device includes one or more ingress ports for receiving network traffic as packets, the ingress ports divided into one or more groups of ingress ports, where each ingress port group is connected to an ingress packet processor. The electronic device also includes one or more egress ports for transmitting network traffic as packets towards the intended destinations, the egress ports divided into one or more groups of egress ports, where each egress port group is connected to an egress packet processor. An ingress port in this context corresponds to a transmission channel that is associated with a source device, while an egress port corresponds to a transmission channel that is associated with a destination device. Different ingress and egress ports are associated with different transmission channels and the different ports process data for different destinations. For each egress packet processor, the electronic device includes one or more dedicated packet queues, which may also referred to as egress queues or egress buffers, in memory for temporarily storing packet data to be transmitted through egress ports coupled to the egress packet processor.

The electronic device includes one or more traffic managers for managing the writing of packet data to the packet queues. Each traffic manager includes and manages one or more memory buffers (also referred to simply as buffers) to temporarily store packet data that are to be sent to packet queues, for forwarding through an egress port group coupled to an egress packet processor. A traffic manager receives packet data from the ingress ports in units of data segments, which are referred to as cells, where a packet is composed of one or more cells. A crossbar, which interconnects the ingress packet processors to the traffic managers, broadcasts packet data from the ingress packet processors to all traffic managers in parallel. Each traffic manager reads state information provided along with each cell of packet data to determine if packet data incoming in the next cycle should be written to buffers managed by the traffic manager. By analyzing the state information for all the cells broadcast by the crossbar, each packet manager independently computes the total amount data, e.g., total number of cells, to be written across all the traffic managers in the next cycle.

In some implementations, the electronic device also includes one or more ingress arbiters with traffic shapers, with each ingress arbiter connecting one of the ingress port groups to the corresponding ingress packet processor. Each ingress arbiter determines a traffic rate at which the corresponding ingress packet processor transmits packet data to the traffic managers.

In some implementations, the electronic device includes one or more egress packet processors. Each egress packet processor receives packet data from the traffic managers at a particular traffic rate. In some implementations, the electronic device also includes one or more egress arbiters with traffic shapers, with each egress arbiter connecting an egress packet processor to an egress port group. Each egress arbiter determines a traffic rate at which the corresponding egress packet processor receives packet data from the traffic managers.

In some implementations, the electronic device manages or regulates power consumption by the device by maintaining the device current within an acceptable range. This is achieved by controlling one or more tasks performed by the device (for example, rates at which packets or cells, or both, are processed by the device) according to respective task configurations specified by one of one or more device operating regions (OREs), each of which specifies acceptable ranges for various device parameters, for example, temperature and/or current.

In some implementations, the electronic device manages the power consumption by managing the throughput to be within a specified limit for an ORE in which the device is operating. In some of these implementations, the throughput is managed by controlling rates at which ingress arbiters forward data received from ingress ports to respective ingress packet processors connected to the ingress arbiters. An ingress arbiter controls the data forwarding rate using sizes of the packets as a parameter to determine whether to forward packets to the corresponding ingress packet processor. The ingress arbiter is allocated a number of power credits. To forward an amount of data to the ingress packet processor, the ingress arbiter determines a number of power credits used as representative of an amount of power to be consumed by the electronic device to process packet(s) corresponding to the amount of data. The amount of power consumed is proportional to the size of the packet(s), and the corresponding number of power credits to process the packet is determined as a function of the size of the packet. In some implementations, at an instant in time, the ingress arbiter forwards a packet to the ingress packet processor if the number of power credits available to the ingress arbiter is non-negative. In some cases, a packet is forwarded if the available power credits at that time instant is greater than or equal to a number of power credits used to process the packet. The power credits available to the ingress arbiter are replenished at specified intervals, where the number of power credits added for replenishment is determined as a function of the target throughput for the present ORE of the electronic device. In this manner, the electronic device achieves the target throughput at a time instant, while limiting the power consumption by controlling the data forwarding rate as a function of the packet size.

In some implementations, the throughput is managed by controlling rates at which egress arbiters forward packets received from traffic managers to respective egress packet processors connected to the egress arbiters, using a power credit management process similar to that described in the preceding section. In some implementations, the throughput is managed by controlling rates at which a combination of one or more ingress arbiters and one or more egress arbiters forward packets to respective ingress packet processors and egress packet processors, using a power credit management process similar to that described in the preceding section.

The subject matter described in this specification can be realized in particular implementations so as to achieve one or more of the following advantages. Managing the throughput by controlling the rate at which data, cells, or packets are forwarded by the ingress arbiter (and/or the egress arbiter, as the case may be) such that power consumption stays within the configured power expenditure profile for the present ORE helps to maintain the device current at safe levels, while maximizing performance. Controlling the device current enables regulation of device power consumption for device safety. Without such control measures, if the current exceeds a tolerable or acceptable range of the device, then the device can be damaged (for example, burnout of one or more components leading to malfunctioning). Controlling the device current to regulate the power consumption can also lead to cost savings in operating the device. The disclosed mechanisms are useful to limit power consumption in extreme scenarios, e.g., temperature spikes in the device enclosure or environment, or sudden traffic loading changes. By controlling the data forwarding rate within the packet processing logic unit (e.g., ingress arbiters, ingress packet processors, traffic managers, egress arbiters, egress packet processors, or any suitable combination of these, also referred to as the device pipeline), a maximum pipeline throughput for the packet processing logic unit can be achieved for a fixed power envelope (e.g., upper and lower limits on power consumption for the present ORE).

The details of one or more implementations are set forth in the accompanying drawings and the description below. Other features, aspects, and advantages will become apparent from the description, the drawings, and the claims.

BRIEF DESCRIPTION OF THE DRAWINGS

FIG. 1 illustrates an example electronic device that includes traffic managers.
FIG. 2 illustrates an example electronic device that includes traffic managers along with one or more ingress arbiters that each includes a traffic shaper.
FIG. 3 illustrates an example configuration showing different operating regions (OREs) for an electronic device.
FIG. 4 is a block diagram showing components of an example power credit management scheme used by an electronic device.
FIGS. 5A and 5B illustrate example patterns of a bit vector used in an example power credit management scheme by an electronic device.
FIG. 6 illustrates an example process employed by an electronic device to manage power consumption by the device.

Like reference numbers and designations in the various drawings indicate like elements. Various embodiments shown in the figures are merely illustrative representations and are not necessarily drawn to scale.

DETAILED DESCRIPTION

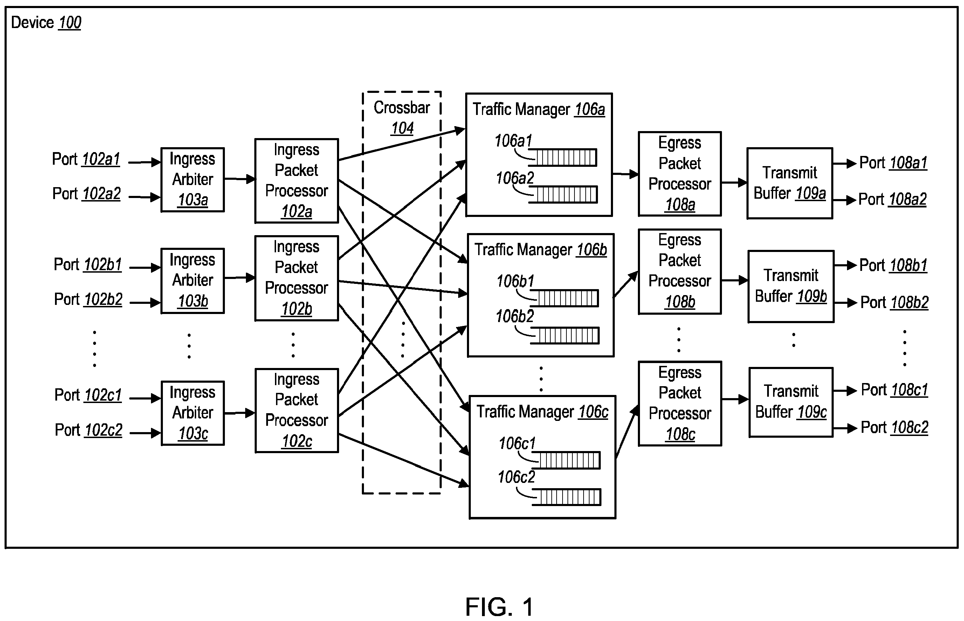

FIG. 1 illustrates an example electronic device 100 that includes traffic managers, e.g., traffic managers 106a, 106b and 106c. The electronic device 100 also includes ingress ports, ingress arbiters to which the ingress ports are connected, and corresponding ingress packet processors, e.g., ingress ports 102a1 and 102a2 connected to ingress arbiter 103a, which receives packets from ingress ports 102a1 and 102a2 and forwards interleaved packets to ingress packet processor 102a; ingress ports 102b1 and 102b2 connected to ingress arbiter 103b, which receives packets from ingress ports 102b1 and 102b2 and forwards interleaved packets to ingress packet processor 102b; and ingress ports 102c1 and 102c2 connected to ingress arbiter 103c, which receives packets from ingress ports 102c1 and 102c2 and forwards interleaved packets to ingress packet processor 102c. A crossbar 104 in the electronic device 100 connects the ingress packet processors to the traffic managers. The ingress packet processors operate on packets serially. The electronic device 100 also includes egress packet processors 108a, 108b and 108c, and corresponding transmit buffers 109a, 109b and 109c, respectively, which connect the egress packet processors to groups of egress ports. For example, egress packet processor 108a is connected through transmit buffer 109a to egress ports 108a1 and 108a2; egress packet processor 108b is connected through transmit buffer 109b to egress ports 108b1 and 108b2; and egress packet processor 108c is connected through transmit buffer 109c to egress ports 108c1 and 108c2.

Each traffic manager includes one or more buffers to store packet data, e.g., cells, that are to be sent either to packet queues (e.g., upon arrival of the last cell for the packet), or to egress packet processors (e.g., in case of cut-through traffic), e.g. traffic manager 106a includes buffers 106a1 and 106a2; traffic manager 106b includes buffers 106b1 and 106b2; and traffic manager 106c includes buffers 106c1 and 106c2. Traffic manager 106a forwards cells stored in the buffers 106a1 or 106a2, or both, to the egress packet processor 108a to which it is connected, for transmitting through one or more egress ports in the group of ports coupled to the egress packet processor 108a, e.g., egress ports 108a1 or 108a2, or both. Similarly, traffic manager 106b forwards cells stored in the buffers 106b1 or 106b2, or both, to the egress packet processor 108b, for transmitting through one or more egress ports, e.g., egress ports 108b1 or 108b2, or both, in the group of ports coupled to the egress packet processor 108b; and traffic manager 106c forwards cells stored in the buffers 106c1 or 106c2, or both, to the egress packet processor 108c, for transmitting through one or more egress ports, e.g., egress ports 108c1 or 108c2, or both, in the group of ports coupled to the egress packet processor 108c.

In some implementations, the electronic device 100 also includes egress arbiters (not shown in FIG. 1) that are each coupled to a traffic manager and an associated egress packet processor, where an egress arbiter receives packet data, e.g., cells, from the traffic manager to which it is connected and forwards the packet data to the connected egress packet processor. For example, an egress arbiter connected to traffic manager 106a receives packet data from the traffic manager 106a and forwards the packet data to egress packet processor 108a; an egress arbiter connected to traffic manager 106b receives packet data from the traffic manager 106b and forwards the packet data to egress packet processor 108b; and an egress arbiter connected to traffic manager 106c receives packet data from the traffic manager 106c and forwards the packet data to egress packet processor 108c.

In some implementations, the electronic device 100 is a portion of a network device e.g., a network switch e.g., an Ethernet switch that includes data sources. In some other implementations, the electronic device 100 is a network device, e.g., network switch or network interface card (NIC), and data sources are external to the network switch. In either case, the electronic device 100 performs forwarding operations on packet data at very high speeds, e.g., potentially on the order of tens of thousands of bits per second (bps), with high efficiency, e.g., minimum buffering and no buffer overflow in the device. In some other implementations, the electronic device 100 is a general-purpose processing unit or a storage device.

The various traffic managers, ingress packet processors, egress packet processors, ingress arbiters, egress arbiters, buffers, packet queues and port groups described in this specification can be implemented in a number of technologies. For example, a buffer or a packet queue includes components that can be implemented using combinational logic circuitry, e.g., logic gates, flip-flops and registers. A buffer or a packet queue also includes memory components that can be implemented using memory chips or be fabricated on one integrated circuit with the rest of the transmit buffer. Logic for the traffic manager logic, ingress arbiters and/or egress arbiters, and ingress packet processors and/or egress packet processors, can be implemented as one or more programmed microprocessors, one or more programmed microcontrollers, one or more application-specific integrated circuits (ASICs), or one or more programmed processor cores or sets of processor cores on a larger integrated circuit. A port group can include physical ports or logical ports. A port group includes a set of serializer/deserializer (SERDES) lanes operating at a particular rate, e.g., 10 Gbps, 25 Gbps, 50 Gbps, or 100 Gbps each. A physical port is associated with one or more SERDES lanes. For example, a 100 Gbps port can be associated with ten 10 Gbps lanes, four 25 Gbps lanes, two 50 Gbps lanes, or one 100 Gbps lane, depending on the underlying SERDES technology used. Similar to a physical port, a logical port is also associated with a destination; however, a logical port includes multiple physical connections to the destination. A logical port can be implemented as one or more physical ports. A logical port can be bound to one or more aggregate port buffers. A crossbar is a set of wires that interconnect the ingress packet processors to traffic managers. The wires can be entirely internal to the device, span multiple devices, or a hybrid in which some ingress packet processors and traffic managers are connected using internal wires only, while other ingress packet processors and traffic managers are connected using wires that span multiple devices. This specification will describe operations performed by these and related components in various implementations of the components, and refer to the components as being "configured to" perform the operations. This should be understood to mean that the components include hardware, firmware, software, circuitry, or a combination of them that in operation cause the components to perform the operations.

In some implementations, each group of egress ports is associated with different destinations. In some implementations, a destination is another electronic device, e.g., another Ethernet switch, or a peripheral device, e.g., a packet processor.

Network traffic packets for various communications channels are received at the electronic device 100 through one or more ingress ports 102a1, 102a2, 102b1, 102b2, 102c1 and 102c2, for forwarding towards their respective destinations through one or more egress ports in the egress ports 108a1, 108a2, 108b1, 108b2, 108c1 and 108c2. While waiting to be transmitted through the egress ports, the cells of packet data are temporarily stored in the buffers, before being sent to packet queues corresponding to the target egress ports. The traffic managers 106a, 106b and 106c manage storage of the packet data in the buffers in units of cells.

The ingress packet processors in the electronic device 100, e.g., ingress packet processors 102a, 102b and 102c, receive packets from various external data sources through the ingress ports, via the respective ingress arbiters that are coupled to respective ingress packet processors. The crossbar 104 receives packet data from the ingress packet processors and broadcasts the cells of packet data to all the traffic managers in parallel. State information is included with each cell, which provides information on the target egress port through which the corresponding packet is to be transmitted. Each traffic manager determines, by reading the state information provided along with each cell, which cells are to be written to buffers managed by the traffic manager.

A traffic manager determines that a cell is to be written to a buffer managed by the traffic manager when the packet corresponding to the cell is destined to be transmitted through an egress port connected to the traffic manager. For example, traffic manager 106a receives all cells broadcast by the crossbar 104. Upon reading the state information provided with each cell, traffic manager 106a determines that some cells belong to packets that are to be transmitted through egress port 108a1, or 108a2, or both, while the remaining cells correspond to packets that are to be transmitted through egress ports in other port groups. The traffic manager 106a accordingly determines that the cells belonging to packets that are to be to be transmitted through egress port 108a1 or 108a2 or both, are to be written to buffers managed by the traffic manager 106a, while the remaining cells, which are destined for egress ports managed by other traffic managers, can be dropped upon reading their state information to compute the total amount of data to be written, as described below.

Since the crossbar 104 broadcasts the packet data with state information to all the traffic managers, each traffic manager determines, upon reading the state information for all the cells, the total amount of data to be written, which includes the cells that are to be written to buffers managed by the traffic manager, and the cells that are to be written to buffers managed by other traffic managers, before the cells are sent either to the egress packet processors, or linked to packet queues upon arrival of the last cell. For example, each of traffic managers 106a, 106b and 106c receives all the packet data cells broadcast by the crossbar 104. Traffic manager 106a determines, by reading the state information from all the cells: (i) which of these cells are to be written to buffers managed by the traffic manager, e.g., buffers 106a1 or 106a2, or both, and (ii) the total amount of data to be written to all the buffers across all the traffic managers, e.g., buffers 106a1, 106a2, 106b1, 106b2, 106c1 and 106c2. Similarly, each of traffic managers 106b and 106c determines, from the state information provided with all the cells broadcast by the crossbar 104: (i) which of these cells are to be written to buffers managed by the traffic manager, e.g., buffers 106b1 or 106b2, or both, managed by traffic manager 106b, or buffers 106c1 or 106c2, or both, managed by traffic manager 106c, and (ii) the total amount of data to be written to all the buffers across all the traffic managers.

Since all the traffic managers receive the same cells that are broadcast by the crossbar 104, each traffic manager gets an identical view of the packet data. Accordingly, the total amount of data computed by each traffic manager is the same. In this manner, each traffic manager independently determines, using a distributed approach, the total amount of data to be written across all the buffers.

When a traffic manager writes packet data to a buffer, device power is consumed. The consumption of power can be high, e.g., for high data rate traffic or a large number of traffic sessions, in which the traffic managers write a large amount of cells to the buffers. For example, if there are $N$ traffic managers, each writing M cells per clock cycle, the total number of write operations in a clock cycle is $N \times M$. $N$ and $M$ are both integers greater than zero. For a large $N$, or a large M, or both, the total power consumed in write operations to the buffers can be high, which can be a major portion of the energy expenditure by the electronic device 100. In some cases, the raw activity caused by packets traversing the electronic device 100, e.g. during transmission on the internal circuits and links, consumes power that contributes to the energy expenditure by the electronic device.

In some implementations, the total energy consumed by the traffic managers in writing to the respective buffers is controlled to be within certain budgeted values by limiting the total number of writes that are performed across all the traffic managers in a clock cycle. For example, in some implementations, the electronic device 100 is configured such that the total number of write operations per clock cycle across all traffic managers is limited to a value that is set to limit the total energy consumed by the traffic managers in performing write operations within the budgeted values. In such implementations, each traffic manager independently determines which cells to drop.

Each traffic manager determines, based on the information broadcast by the crossbar 104 to all the traffic managers, (i) the cells that are to be written to buffers managed by the traffic manager, and (ii) the total amount of data to be written to all the buffers across all the traffic managers. Each traffic manager compares the total amount of data to be written across all the traffic managers, represented as a total number of write operations, to a predetermined threshold level, e.g., a preselected number of write operations; if the traffic manager determines that the total amount of data to be written exceeds the threshold level, then the traffic manager decides to drop some of the cells it could write to buffers managed by the traffic manager.

In some implementations, each traffic manager determines the number of cells to drop such that the total amount of data to be written across all the traffic managers becomes less than the threshold level. In other implementations, each traffic manager determines the number of cells to drop such that a prorated share of its contribution to the total amount of data to be written across all the traffic managers becomes less than the threshold level. In some implementations, a traffic manager considers several factors to determine whether to accept or drop cells. This factors include the type of packet (e.g., unicast, multicast, unicast with additional copies, multicast with additional copies, among others); the destination type (e.g., central processing unit (CPU) or front panel port, among others); the packet source type (e.g., CPU or front panel port, among others); source port and destination port; current drop state of the packet queue to which the cell will be linked (for unicast traffic); and drop rate from a given source or destination (e.g., based on previous drops to provide fairness).

In some implementations, the order in which cells are selected for discarding depends on the priority or importance of the traffic types. For example, in some cases, unicast, CPU traffic, mirrored traffic, multicast traffic, and broadcast traffic have descending levels of priority, in that order. Accordingly, when selecting cells based on traffic type, the traffic manager first selects cells of the lowest priority traffic, e.g., broadcast traffic, followed by multicast, mirrored traffic, CPU traffic, and unicast, in that order. If the priorities of different types of traffic are different, then the order of selection also may be different. For example, in some implementations, multicast traffic has higher priority than mirrored traffic. In such implementations, the traffic manager selects, for dropping, mirrored traffic cells before selecting multicast cells. In this manner, in some implementations, to satisfy power constraints, a traffic manager selectively determines what types of traffic to be written, and what type of traffic cells to drop: first dropping cells of traffic types that have lower priority, and progressively selecting cells of higher priority traffic types if needed.

In some implementations, a traffic manager checks the total amount of data to be written with multiple thresholds, to determine the types of cells to write to buffers, or to drop. As an example, in some implementations, traffic managers in the electronic device 100 compare the total number of cells to be written to three threshold levels-first, second and third thresholds. The first threshold has the lowest value, e.g., 12 cells, and the third threshold has the highest value, e.g., 24 cells, with the second threshold being in the middle, e.g., 18 cells, of the first and third thresholds in value. The traffic managers receive traffic of three different types-multicast traffic, CPU traffic and unicast traffic, with multicast traffic having the lowest priority, CPU traffic having higher priority than multicast traffic, and unicast traffic having the highest priority.

In the above example implementation, if a traffic manager, e.g., traffic manager 106a, determines that the total number of cells to be written is equal to or greater than the first (lowest) threshold but less than the second threshold, then the traffic manager selects the traffic type with the lowest priority, e.g., multicast traffic, to drop. Accordingly, prior to the buffer write operations, the traffic manager drops all multicast cells that were to be written to buffers managed by the traffic manager. If the traffic manager determines that the total number of cells to be written is equal to or greater than the second threshold but less than the third threshold, then the traffic manager selects, for dropping, the multicast traffic and further selects cells of the traffic type with the next higher priority, e.g., CPU traffic. Accordingly, prior to data being written to the buffers, the traffic manager drops all multicast cells and all CPU traffic cells that were to be written to buffers managed by the traffic manager. However, if the traffic manager determines that the total number of cells to be written is equal to or greater than the highest threshold, e.g., the third threshold, then the traffic manager selects, for dropping, cells of the traffic type with the highest priority, e.g., unicast cells, in addition to selecting lower priority traffic, e.g., multicast traffic and CPU traffic.

In the above manner, one or more threshold levels can be enabled, depending on the power consumption policies in the electronic device 100 and the types of traffic processed by the electronic device. Using the different threshold levels, the electronic device can dynamically determine what types of traffic to drop to manage power consumption of the electronic device.

In some implementations, the one or more threshold levels can be set by a user, e.g., by an operator who configures the electronic device and sets the threshold levels in accordance with targeted limits of power consumption by the electronic device. In such implementations, the user can change the threshold levels, depending on changes in the targeted limits. In some implementations, the one or more threshold levels are set to constant values, e.g., at the time of device manufacture.

In some implementations, in addition, or as an alternative, to reducing power consumption by controlling storage of cells in buffers, power consumption is reduced by controlling the switching operations performed by the electronic device 100. Switching is controlled by limiting the rate of data or packet processing by the ingress packet processors. In some implementations, the rate of data or packet processing by an ingress packet processor is limited by limiting the data or packet rate going into the ingress packet processor, e.g., by using power credits, as described below.

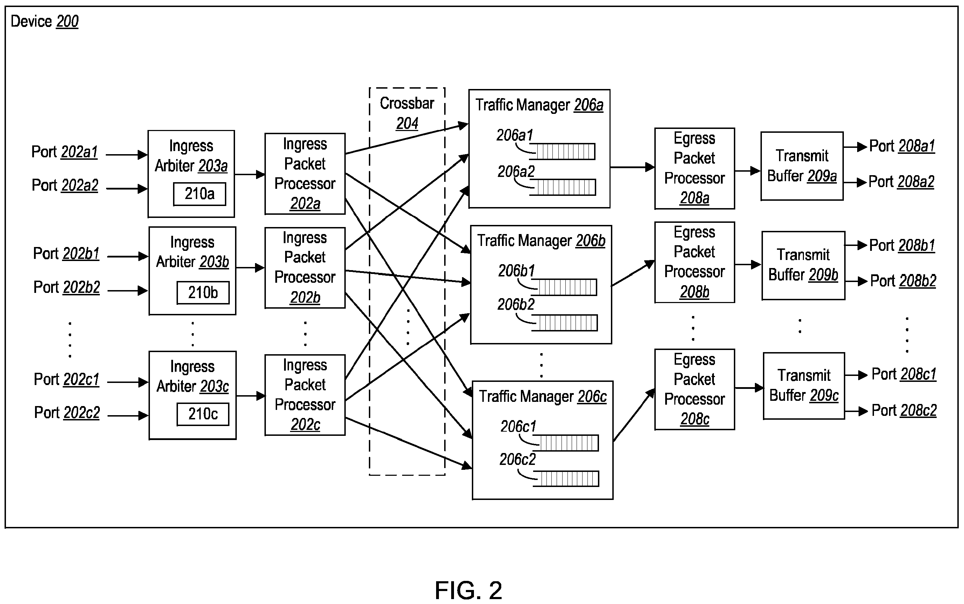

FIG. 2 illustrates an example electronic device 200 that includes traffic managers 206a, 206b and 206c, along with ingress arbiters, e.g., ingress arbiters 203a, 203b and 203c, that each includes a traffic shaper, e.g., ingress arbiters 203a, 203b and 203c include traffic shapers 210a, 210b and 210c respectively. The electronic device 200 also includes ingress ports that are connected to the ingress arbiters, e.g., ingress ports 202a1 and 202a2 connected to ingress arbiter 203a; ingress ports 202b1 and 202b2 connected to ingress arbiter 203b; and ingress ports 202c1 and 202c2 connected to ingress arbiter 203c. Each traffic shaper regulates data or packet rate across all the ingress ports associated with the corresponding ingress arbiter. A crossbar 204 in the electronic device 200 connects the ingress packet processors to the traffic managers. The electronic device 100 also includes egress packet processors 208a, 208b and 208c, and corresponding transmit buffers 209a, 209b and 209c, respectively, which connect the egress packet processors to groups of egress ports. For example, egress packet processor 208a is connected through transmit buffer 209a to egress ports 208a1 and 208a2; egress packet processor 208b is connected through transmit buffer 209b to egress ports 208b1 and 208b2; and egress packet processor 208c is connected through transmit buffer 209c to egress ports 208c1 and 208c2.

Each traffic manager includes one or more buffers to buffer packet data, e.g. traffic manager 206a includes buffers 206a1 and 206a2; traffic manager 206b includes buffers 206b1 and 206b2; and traffic manager 206c includes buffers 206c1 and 206c2. Traffic manager 206a forwards cells stored in the buffers 206a1 or 206a2, or both, to a packet queue corresponding to the egress packet processor 208a, for transmitting through one or more egress ports in the group of ports coupled to the egress packet processor 208a, e.g., egress ports 208a1 or 208a2, or both. Similarly, traffic manager 206b forwards cells stored in the buffers 206b1 or 206b2, or both, to a packet queue for egress packet processor 208b, for transmitting through one or more egress ports, e.g., egress ports 208b1 or 208b2, or both, in the group of ports coupled to the egress packet processor 208b; and traffic manager 206c forwards cells stored in the buffers 206c1 or 206c2, or both, to a packet queue for egress packet processor 208c, for transmitting through one or more egress ports, e.g., egress ports 208c1 or 208c2, or both, in the group of ports coupled to the egress packet processor 208c.

The ingress ports in the electronic device 200, e.g., ingress ports 202a1, 202a2, 202b1, 202b2, 202c1 and 202c2, receive packets from various external data sources and forward the packets to the respective ingress arbiters to which the ingress ports are connected. The ingress arbiters 203a, 203b and 203c include traffic shapers, e.g., traffic shapers 210a, 210b and 210c respectively, to shape or manage the packet data traffic that is sent to the ingress packet processors by limiting the data or packet rate fed to the ingress packet processors, e.g., 202a, 202b and 202c respectively, coupled to the ingress arbiters, as described in greater detail below. The crossbar 204 receives packet data from the ingress packet processors, e.g., in units of cells, and broadcasts the packet data to all the traffic managers in parallel. State information is included with each cell, which provides information on the target egress port through which the corresponding packet is to be transmitted. Each traffic manager determines, by reading the state information provided along with each cell, which cells are to be written to buffers managed by the traffic manager.

In some implementations, the electronic device 200 is similar to the electronic device 100 and performs functions that include functions performed by the electronic device 100, as described above. In such implementations, the crossbar 204 performs functions that include functions performed by the crossbar 104, and the traffic managers 206a, 206b and 206c perform functions that include functions similar to those performed by the traffic managers 106a, 106b and 106c described above.

In some implementations, there is one ingress arbiter for each group of ingress ports, connecting the ingress port group to the corresponding ingress packet processor. For example, ingress arbiter 203a connects the group of ingress ports that include ingress ports 202a1 and 202a2 to the corresponding ingress packet processor 202a; ingress arbiter 203b connects the group of ingress ports that include ingress ports 202b1 and 202b2 to the corresponding ingress packet processor 202b; and ingress arbiter 203a connects the group of ingress ports that include ingress ports 202c1 and 202c2 to the corresponding ingress packet processor 202c. However, in other implementations, there are multiple ingress arbiters connecting a group of ingress ports to the corresponding ingress packet processor, or an ingress arbiter connects multiple groups of ingress ports to the respective ingress packet processors.

As noted above, the ingress arbiters 203a, 203b and 203c are employed in the electronic device 200 to limit the rate at which packet data is fed to the respective ingress packet processors connected to each ingress arbiter. For example, ingress arbiter 203a limits the rate at which packet data, received from one or more ingress ports 202a1 and 202a2, is fed to the ingress packet processor 202a that is connected to the output of the ingress arbiter 203a. Similarly, ingress arbiter 203b limits the rate at which packet data, received from one or more ingress ports 202b1 and 202b2, is fed to the ingress packet processor 202b that is connected to the output of the ingress arbiter 203b; and ingress arbiter 203c limits the rate at which packet data, received from one or more ingress ports 202c1 and 202c2, is fed to the ingress packet processor 202c that is connected to the output of the ingress arbiter 203c. By limiting the rate at which packet data is fed to the ingress packet processors, the amount of processing performed by the ingress packet processors is limited, leading to a reduction in power consumption. Additionally, the number of cells that are sent to the traffic managers per clock cycle is also lowered, which can in turn reduce the probability of cells being dropped by the traffic managers. This can also facilitate reducing the power consumption by the electronic device. Additionally, by reducing the probability of cells being dropped by the traffic managers, fewer packets are lost by the electronic device 200 as a result of the cell dropping actions described above, leading to improvements in reliability of the electronic device 200 and improvements in data transmission.

As described in greater detail in the following sections, in some implementations, the electronic device 200 manages power consumption by managing the throughput to be within a specified limit for a current ORE in which the device is operating. The throughput is managed by ingress arbiters controlling data forwarding rates to respective ingress packet processors connected to the ingress arbiters, using power credits. In some implementations, the ingress arbiters use the respective traffic shapers to control the data forwarding rates using power credits. For example, in such implementations, ingress arbiter 203a uses traffic shaper 210a to control the rate at which data received from ingress ports 202a1 or 202a2 are forwarded (in packets) to ingress packet processor 202a; ingress arbiter 203b uses traffic shaper 210b to control the rate at which data received from ingress ports 202b1 or 202b2 are forwarded to ingress packet processor 202b; and ingress arbiter 203c uses traffic shaper 210c to control the rate at which data received from ingress ports 202c1 or 202c2 are forwarded to ingress packet processor 202c.

In some implementations, each ingress arbiter further includes, in addition to traffic shapers, input buffers. The input buffers are used to temporarily store incoming packet data until power credits are available to forward the data to the corresponding ingress packet processor, e.g., in cases where the incoming packet rate is greater than the processing rate of the ingress packet processor. In some implementations, each input buffer includes components that can be implemented using combinational logic circuitry, e.g., logic gates, flip-flops and registers. An input buffer also includes memory components that can be implemented using memory chips or fabricated on one integrated circuit with the rest of the transmit buffer.

In some implementations, techniques employed by the ingress arbiters, e.g., ingress arbiters 203a, 203b and 203c, to control the rate of data forwarding using power credits, are used in conjunction with, or as an alternative to, the threshold comparison techniques employed by the traffic managers, e.g., traffic managers 206a, 206b and 206c. These threshold comparison techniques are similar to those described previously with respect to traffic managers 106a, 106b and 106c in the electronic device 100.

Although not shown in FIG. 2, in some implementations, the electronic device 200 includes egress arbiters in addition, or as an alternative to, the ingress arbiters. Each egress arbiter is coupled to a traffic manager and an associated egress packet processor, where an egress arbiter receives packet data, e.g., cells, from the traffic manager to which it is connected and forwards the packet data to the connected egress packet processor. For example, in such implementations, an egress arbiter connected to traffic manager 206a receives packet data from the traffic manager 206a and forwards the packet data to egress packet processor 208a; an egress arbiter connected to traffic manager 206b receives packet data from the traffic manager 206b and forwards the packet data to egress packet processor 208b; and an egress arbiter connected to traffic manager 206c receives packet data from the traffic manager 206c and forwards the packet data to egress packet processor 208c. In some of these implementations, power consumption by the electronic device 200 is managed by the egress arbiters controlling rates at which packet data, received from respective traffic managers, are forwarded to respective egress packet processors connected to the egress arbiters, using power credits. In some implementations, a combination of one or more ingress arbiters and one or more egress arbiters are employed to manage power consumption by controlling data forwarding rates using power credits.

In the following sections, techniques to manage power consumption by controlling data forwarding rates using power credits are described with respect to ingress arbiters. However, the techniques are also applicable to egress arbiters, or any suitable combination of ingress and egress arbiters.

In some implementations, the electronic device 100, or the electronic device 200, or both, regulates power consumption by maintaining the device current within an acceptable range. For a given operating voltage ($V_{dd}$), the power consumed by an electronic device, e.g., electronic device 200, is directly proportional to the device current ($I_{dd}$). The electronic device can be damaged (for example, burnout of one or more components leading to malfunctioning) if the current exceeds a tolerable or acceptable range of the device (for example, beyond a specified upper limit). As described in greater detail below, in some implementations, the device current is kept within an acceptable range by controlling the rate at which packets are forwarded by the ingress arbiters to the respective ingress packet processors, limiting the device throughput such that the device current stays within the range specified for the present device ORE. By controlling the data forwarding rate, the rate at which packets or cells of packets are processed by the packet processing logic unit or pipeline of the electronic device is controlled, which limits device current, resulting in regulation of the power consumption for device safety. Additionally or alternatively, the throughput can be limited in this manner to regulate the power consumption for cost purposes. In the following sections, techniques to control the throughput by controlling the data forwarding rate by the ingress arbiters are described with respect to the electronic device 200. However, the techniques are also applicable to the electronic device 100.

The device current is dependent on several factors, including temperature and traffic load. The temperature includes one or more of the device junction temperature ($T_j$), ambient room temperature, or temperature of the device enclosure, among others. In some cases, the device current can increase due to increase in room temperature. For example, the electronic device 200 can be a network switch in a server in a data center. A cooling system in the data center can fail, causing the room temperature to rise, which can cause an increase in the device current. In some cases, the device current can increase due to a more localized temperature increase. For example, a fan in the device enclosure (for example, the server enclosure) can fail, causing the temperature within the enclosure to rise, which can lead to an increase in the device current. In some cases, the device current can increase due to an increase in the traffic load in the device, even if other conditions are constant (for example, constant operating voltage and ambient temperature). For example, the device current can increase as the amount of data passing through electronic device 200 increases.

It can be challenging to control temperature or the traffic load, which are factors that may be beyond the purview of the electronic device 200. In some cases, the fan speed of the device enclosure can be changed, or additional cooling components can be activated, among other measures, to control the temperature. However, such measures may not be sufficient, and additional remedies might be used. In the implementations described herein, the electronic device 200 maintains the device current within tolerable ranges for the device, when external factors such as temperature and traffic load vary, by controlling one or more rates at which the ingress arbiters forward packets to the ingress packet processors.

Using the disclosed techniques, the performance of the electronic device 200 is maximized while limiting power consumption. For example, the maximum throughput, or close to the maximum throughput, for the packet processing logic unit is achieved for a fixed power envelope, which corresponds to an upper limit on the device current for the present ORE. The techniques are useful to limit power consumption (e.g., by limiting the device current) in extreme scenarios, e.g., due to temperature spikes or sudden traffic load changes, or both, which affect the device current.

In some implementations, the electronic device 200 collects measurement data for certain device attributes or environmental factors, or both, at specific time instants during operation of the device, to determine the present ORE for the device. In some implementations, the device attributes for data collection include the device current ($I_{dd}$), among other suitable attributes. In some implementations, the device attributes include load on various component stages of the electronic device, such as the processing pipeline, an ingress port, or an egress port, among others. The device attributes can also include packet processing rate (for example, in units of million packets processed per second, MPPS), the cell processing rate (for example, in units of million cells processed per second, MCPS), throughput (for example, in units of gigabits per second, Gbps), or utilization (for example, ratio of throughput to capacity, where capacity corresponds to the maximum throughput for the electronic device processing pipeline, aggregate rate for enabled input-output or maximum supported input-output).

The environmental factors for data collection include the device temperature (such as junction temperature, $T_j$, and/or ambient temperature), among other factors. In some cases, the environmental factors can include speed of fan or other cooling system used to cool the electronic device or the enclosure of the device, or time of day, among others. The environmental factors can also be application-based, e.g., a heavy workload that is about to start execution, or has started execution, which can cause the operating state of the electronic device 200 to change.

The measurement data can be collected periodically. In some cases, the measurements are based on event triggers. For example, measurement by a temperature sensor can exceed a threshold value, which can trigger measurements of the device current and the temperature. As another example, the electronic device can detect an increase in traffic load, which can trigger the measurements.

In some implementations, the measurements are made by the electronic device itself. For example, the electronic device 200 can be a network switch realized on an ASIC chip, and the device can measure the current on the chip. As another example, the electronic device can include one or more internal sensors for local temperature measurement. Additionally or alternatively, in some implementations, the measurements are made by an entity external to the electronic device. For example, one or more sensors mounted on the device enclosure and/or elsewhere in the data center can be used to measure the temperature (e.g., ambient temperature). In some cases, the current is monitored external to the device.

In some implementations, the measurements are made by hardware, e.g., on-chip circuitry or a microcontroller coupled to the device. In some implementations, the measurements are made by software, e.g., one or more data collection routines realized using firmware embedded in the electronic device 200, or in another external device that is communicably coupled to the electronic device 200.

The electronic device 200 determines a suitable ORE for the device by using the collected data to map to one of several OREs specified for the device. In some implementations, a combination of the measured values is used to specify the present ORE for the electronic device, which provides an indication of the present operating state of the device.

In some implementations, each ORE specifies a range of values for each device attribute and/or environmental factor for which data is collected, with a range limited by an upper threshold and a lower threshold. In some implementations, the ranges in the different OREs are non-overlapping, but the ranges are continuous across the OREs. The measurement data for each device attribute and/or environmental factor is compared to respective range thresholds in various OREs specified for the electronic device 200, to select one of the OREs as the present ORE for the device.

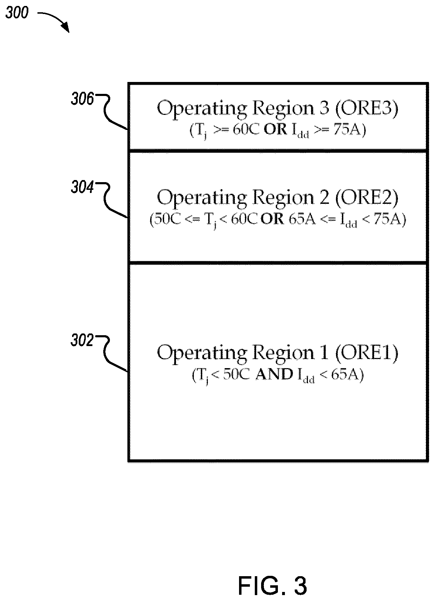

FIG. 3 illustrates an example configuration 300 showing three different OREs for the electronic device 200. In the illustrated configuration, the device current ($I_{dd}$) and the junction temperature ($T_j$) are used to classify the three OREs.

The example configuration 300 of FIG. 3 includes three different OREs 302, 304, and 306. As shown, ORE 302, referred to as operating region 1 (ORE1), corresponds to the following conditions being satisfied: the temperature $T_j$ below 50 degrees Celsius ($T_j < 50C$) and the device current $I_{dd}$ below 65 amperes ($I_{dd} < 63$). ORE 304, referred to as operating region 2 (ORE2), corresponds to at least one of the following conditions being satisfied: the temperature $T_j$ equal to or greater than 50C but less than 60C ($50C \leq T_j < 60C$), or the device current $I_{dd}$ equal to or greater than 63 but less than 73 ($63 \leq I_{dd} < 73$). ORE 306, referred to as operating region 3 (ORE3), corresponds to at least one of the following conditions being satisfied: the temperature $T_j$ equal to or greater than 60C ($T_j \geq 60C$), or the device current $I_{dd}$ equal to or greater than 73 ($I_{dd} \geq 73$).

The example illustrates that each of ORE1, ORE2 and ORE3 corresponds to a specific range of the device current and the temperature. In some implementations, an ORE with ranges having higher threshold values is considered to be higher alert compared to an ORE with ranges having lower threshold values. This is because higher values of temperature and/or device current increase the risk of malfunctioning of the device. In the example shown, ORE3 is considered higher alert compared to ORE2 and ORE1, and ORE2 is considered to be higher alert or worse compared to ORE1. In this case, ORE1 can be considered to be the desired ORE for the electronic device among the three different OREs shown, because the risk of malfunctioning of the device is the lowest when the device is operating with device current and junction temperature that fall within ranges of ORE1 (for example, $T_j < 50C$ and $I_{dd} < 63$), compared to operating with device current and/or junction temperature that are in the higher ranges corresponding to ORE2 or ORE3. ORE3 can be considered to be highest risk. The device current or junction temperature, or both, at the ranges specified by ORE3 are considered to be close to the tolerable upper limits of the device 200; an upward change in the device current and/or junction temperature can cause the device 200 to malfunction.

The electronic device 200 determines the operating state for the device at a given time by comparing the values of the temperature or the device current, or both, that are measured for the corresponding time period, respectively to the $T_j$ ranges and the $I_{dd}$ ranges specified for different OREs. In some implementations, the electronic device performs the comparison in an order starting with the highest alert state and ending with the lowest alert state. For example, the temperature and/or the device current can be compared respectively to the $T_j$ ranges and the $I_{dd}$ ranges in the order of ORE3 → ORE2 → ORE1. In such a case, the electronic device 200 compares the temperature and/or the device current first to the $T_j$ and $I_{dd}$ ranges corresponding to ORE3. If either measured value is within the respective range in ORE3 (for example, temperature $T_j$ equal to or greater than 60C, or device current $I_{dd}$ equal to or greater than 73, or both), then the present operating state is determined to be ORE3. However, if both temperature and device current are less than the respective ranges for ORE3, then the electronic device 200 proceeds to compare the measured values to the $T_j$ and $I_{dd}$ ranges corresponding to ORE2. If (i) both measured values are lower than respective upper threshold values for ORE2 (for example, temperature $T_j$ less than 60C, and device current $I_{dd}$ less than 73), and (ii) either of the measured values matches the respective lower threshold value (for example, temperature $T_j$ equal to or greater than 50C, or device current $I_{dd}$ equal to or greater than 63, or both), then the present operating state is determined to be ORE2. However, if both temperature and device current are less than the respective ranges for ORE2, then the electronic device 200 proceeds to compare the measured values to the $T_j$ and $I_{dd}$ ranges corresponding to ORE1. In this case, both measured values are within the respective range in ORE1 (for example, temperature $T_j$ less than 50C and device current $I_{dd}$ less than 63), and the present operating state is determined to be ORE1.

In the configuration 300, higher alert OREs are prioritized. It can be the case that the values of the temperature and device current are such that conditions for two OREs are satisfied. For example, a temperature $T_j$ of 59C and a device current $I_{dd}$ of 76A satisfies the condition for ORE3 (by satisfying the range threshold for $I_{dd}$ greater than or equal to 73 in ORE3), but also satisfies the condition for ORE2 (by satisfying the range threshold for $T_j$ less than 60C in ORE2). In this case, since ORE3 is a higher alert state compared to ORE2, the electronic device 200 selects ORE3 to be the present operating state. This is facilitated by comparing the values of the temperature or the device current, or both, in the order starting with the highest alert state and ending with the lowest alert state, as noted above. In doing so, the electronic device 200 adopts a conservative approach, moving the operating state to a higher alert state if any of the measured device attributes and/or environmental factors worsen.

In some implementations, upon determining the present ORE, the electronic device 200 controls the rates at which the ingress arbiters, e.g., one or more of ingress arbiters 203a, 203b, or 203c, forward data received from ingress ports to respective ingress packet processors, to maintain the device throughput to be within the range specified for the present ORE. The target or specified data throughput can be different for different OREs of the electronic device; depending on the present operating state that is determined, different data forwarding rates are applied for the functioning of the traffic managers in the electronic device 200. For example, in some implementations, a first configuration is applied for the data forwarding rate when operating state of the electronic device 200 is determined to be in ORE1; a second configuration is applied for the data forwarding rate when the operating state of the device is determined to be in ORE2; and a third configuration is applied for the data forwarding rate when the operating state of the device is determined to be in ORE3. In some cases, the data forwarding rate in ORE1 is greater than the rate in ORE2, which in turn is greater than the rate in ORE3.

The present operating state of the electronic device 200 can change from one ORE to another ORE based on the measurement data. When the operating state changes from one ORE to a different ORE, the device adjusts the data forwarding rate to address the throughput specified by the new ORE. For example, the electronic device 200 may be operating in ORE1 at a point in time when the temperature and/or the device current are measured. The electronic device may determine, upon comparing the measured values to ranges as described above, that at least one of the temperature or the device current has increased, such that the measured value is in the respective range corresponding to ORE2 (or ORE3). For example, the temperature can increase from 45C (in the $T_j$ range for ORE1: $T_j < 50C$) to 52C (in the $T_j$ range for ORE2: $50C \leq T_j < 60C$). Additionally or alternatively, the device current can increase from 63A (in the $I_{dd}$ range of ORE1: $I_{dd} < 63$) to 68A (in the $I_{dd}$ range of ORE2: $63 \leq I_{dd} < 73$). Based on this determination, the electronic device will transition to ORE2, and the ingress arbiters will use the data forwarding rate configured for ORE2, decreasing the rates from the higher values configured for ORE1.

In some implementations, ingress arbiters 203a, 203b, or 203c use a power credit management scheme to control the data forwarding rates to the ingress packet processors 202a, 202b and 202c, respectively coupled to the ingress arbiters, to limit the throughput within the range specified for the present ORE. In some cases, ingress arbiters 203a, 203b, or 203c use respective traffic shapers 210a, 210b and 210c to control the data forwarding rate using the power credit management scheme.

In greater detail, a specific number of power credits are allocated to each ingress arbiter, where the number of power credits allocated is dependent on the aggregate target throughput for the electronic device 200 in the present ORE. In some implementations, a power credit corresponds to a transmission that is expended to perform certain operations, e.g., forwarding data in a packet. When an ingress arbiter, e.g., ingress arbiter 203a, forwards an incoming packet to the corresponding ingress packet processor, e.g., ingress packet processor 202a, a number of power credits are removed from the power credits available to the ingress arbiter. The number of power credits removed is equal to a number of power credits used to forward the packet, which is a function of the packet size. In some cases, the number of power credits used is also a function of the inter-packet gap (IPG) and preamble, or a transmission tax, or both. The transmission tax is a function of the size of the packet and the present ORE. Accordingly, the number of power credits used is proportional to a number of bytes that are processed by the device pipeline for a packet transiting the electronic device 200. A greater number of power credits are removed for larger-sized packets compared to smaller-sized packets, which reflects that more power is consumed to process larger packets by the device pipeline compared to the power consumed to process smaller packets. Applying the transmission tax to determine the number of power credits used further penalizes packets that consume more power for processing, e.g., larger-sized packets. In some implementations, the power credits are specified in units of bytes.

In some implementations, when an ingress arbiter dequeues a packet for forwarding, if the number of power credits needed to process the packet is less than the available number of power credits for the ingress arbiter, the ingress arbiter stops forwarding the packet, until the power credits available to the ingress arbiter are replenished. In other implementations, even if the number of power credits needed to process the packet is less than the available number of power credits for the ingress arbiter, the ingress arbiter forwards the packet as long as power credits are non-negative, but stops forwarding further packets until the power credits available to the ingress arbiter are replenished. In some of these cases, the power credits may go negative for active packets. For example, 1 kilobytes (KB) of power credits may be available at a time instant when a 9 KB packet arrives. Since the available power credits are non-negative (even if less than the size of the packet), the ingress arbiter will start transmitting the 9 KB packet immediately and transmit until completion. In doing so, the power credits will go negative (e.g., 8 KB) following completion of the transmission, and no new packets will be transmitted until power credits are replenished to $\geq 0$.

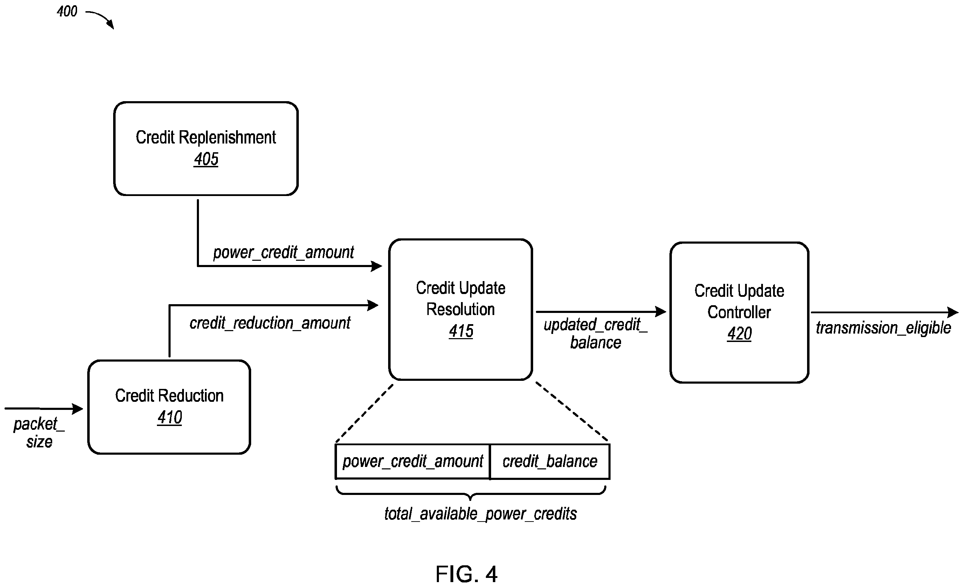

FIG. 4 is a block diagram showing components of an example power credit management scheme 400 used by an electronic device. In some implementations, the power credit management scheme 400 is used by ingress arbiters 203a, 203b, or 203c, to control the data forwarding rates to the ingress packet processors 202a, 202b and 202c, respectively, to limit the throughput within the range specified for the present ORE of the electronic device 200. In some implementations, the power credit management scheme 400 is implemented by a traffic shaper within an ingress arbiter, e.g., by any of traffic shapers 210a, 201b or 210c. In the following sections, the power credit management scheme 400 is described as being performed by ingress arbiters. It should be understood that the operations could be equivalently performed by traffic shapers included in the ingress arbiters.

As shown, the power credit management scheme 400 includes a credit replenishment component 405, a credit reduction component 410, a credit resolution update component 415, and a credit update controller component 420. The components of the power credit management scheme 400 specify operations that are performed by each ingress arbiter to manage the rates at which packets are forwarded. In some implementations, logic for the components of the power credit management scheme 400 are implemented as one or more programmed microprocessors, one or more programmed microcontrollers, one or more ASICs, or one or more programmed processor cores or sets of processor cores on a larger integrated circuit. In some implementations, the components are implemented as software routines, e.g., encoded as instructions on internal memory in the electronic device 200 and executed by each ingress arbiter hardware (e.g., one or more processors performing functions of the ingress arbiters) to perform the corresponding functions.

An ingress arbiter performs operations of the credit replenishment component 405 to replenish power credits that are available to the ingress arbiter to regulate traffic from the ingress arbiter. In some implementations, the credit replenishment component 405 generates the power credits periodically. For example, the ingress arbiter generates power credits at a periodic interval of a refresh period. The refresh period can be, for example, 10 or 20 nanoseconds (ns), or some other suitable time interval. In some cases, the refresh period is dependent on the internal hardware capability of the electronic device 200, and is specified in units of clock cycles of an internal clock pf the device. Accordingly, in every refresh period, a number of power credits specified for the present ORE are generated and made available to the ingress arbiter to use when forwarding packets. In some implementations, there is a maximum credit limit that caps the maximum number of outstanding credits that can be accumulated by an ingress arbiter. Accumulation can occur, for example, if there is no data traffic arrival. In some implementations, the number of outstanding credits may be reset to zero if there is no data traffic arrival, for example, if a timer expires without arrival of any data in the time period measured by the timer.

The credit replenishment component 405 operations generate a specified number of power credits, which are made available to the ingress arbiter to use when forwarding packets. The specified number of power credits that are generated corresponds to the target throughput for the present ORE, and can be different for different OREs. For example, a lower alert ORE, e.g., ORE1, can support a higher throughput than a higher alert ORE, e.g., ORE2 or ORE3. Accordingly, the number of power credits generated can be higher for ORE1 compared that for ORE2 or ORE3, which can cause an ingress arbiter to forward packets at a higher rate in ORE1 compared to the rates for ORE2 or ORE3.

In some implementations, the specified number of power credits, represented by *power credit amount,* is determined using the following equation (1):

$$power\_credit\_amount = \mathrm{CEILING}(refresh\_period * target\_rate / 8) \qquad (1)$$

where *refresh_period* represents the refresh period, and *target_rate* represents the target throughput for the present ORE of the electronic device 200. As an illustrative example, for *refresh_period* = 32 ns and *target rate* = 4800 gigabits per second (Gbps), the *power credit amount* is 18.75 KB. In this example, an ingress arbiter, e.g., any one of ingress arbiters 203a, 203b or 203c, uses the credit replenishment component 405 operations to generate 18.75 KB of power credits every 32ns, which is made available to the ingress arbiter to use for forward packets, to achieve a target throughput of 4800 Gbps.

Following each replenishment, the total power credits available to the ingress arbiter is a sum of the *power credit amount* number of power credits that are newly added, and any credit balance still available to the ingress arbiter, as shown by equation (2):

$$total\_available\_power\_credits = credit\_balance + power\_credit\_amount \qquad (2)$$

where *total_available_power credits* represents the total power credits available to the ingress arbiter following replenishment and *credit balance* represents the balance of power credits that are still available to the ingress arbiter at the time of replenishment. The effect of performing equation (2) is that the credit balance gets updated by an amount equal to the *power_credit_amount.*

In some cases, the ingress arbiter may use a less number of power credits to forward a packet than the number available to the ingress arbiter, such that the credit balance after forwarding the packet is a non-zero positive number. In some cases, the ingress arbiter may use all the power credits available to forward a packet, such that the credit balance is zero. In the latter case, the total power credits that become available to the ingress arbiter is the *power_credit_amount* number of power credits newly added in the refresh period.

An ingress arbiter performs operations of the credit reduction component 410 to determine a number of power credits that are to be used to forward a packet. As noted previously, the number of power credits used is a function of the size of the packet. The ingress arbiter determines the packet size upon dequeueing the final cell (e.g., EOP cell) from a buffer associated with an ingress port that received the packet. In some implementations, the number of power credits used, represented by *credit_reduction_amount,* is determined using equation (3):

$$credit\_reduction\_amount = packet\_size + ipg\_preamble + (weight[i] * packet\_size)$$

$$(3)$$

where *packet size* represents the size of the packet, *ipg_preamble* represents the size of the IPG and the preamble, and *weight[i] * packet_size* represents a transmission tax that is dependent on the size of the packet and the present ORE.

In some implementations, the *ipg_preamble* is a software configured value that is set per ingress arbiter. The value can be determined based on the smallest IPG configured for any egress port. Alternatively, the value can be set per ingress port.

In some implementations, the weight *weight*[*i*] is determined based on the packet size, from a pre-specified number of weight values that are configured for different ranges for packet sizes. For example, a first weight value, *weight*[0], may be specified for packet sizes within a range of 0 bytes and 128 bytes; a second weight value, *weight*[1], may be specified for packet sizes within a range of 128 bytes and 1 KB; a third weight value, *weight*[2], may be specified for packet sizes within a range of 1 KB and 5 KB, and so on. If the ingress arbiter determines that the size of the packet is, for example, 112 bytes, then the ingress arbiter applies *weight*[0] and computes the transmission tax as *weight*[0] * 112 bytes. As another example, if the ingress arbiter determines that the size of the packet is, for example, 2 KB, then the ingress arbiter applies *weight*[2] and computes the transmission tax as *weight*[2] * 2 KB. By applying different weight values to different ranges of packet sizes, the pipeline throughput can be tuned based on different packet size ranges.

The total number of weight values can be any suitable number, e.g., 8, 12, or 16. In some cases, the total number of weight values is a configurable parameter that is determined by a user, e.g., a network administrator, who is managing operations of the electronic device 200. In other cases, the total number of weight values is fixed at the time of device manufacture.

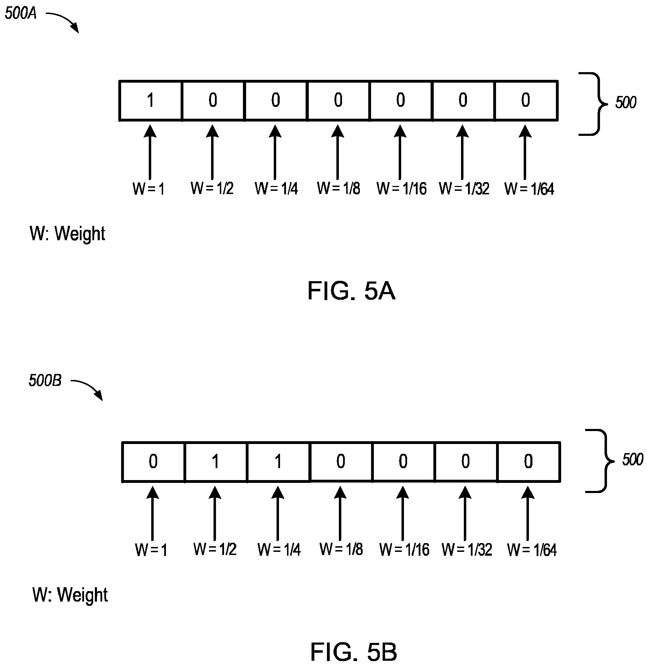

In some implementations, the weight value *weight*[i] is represented as an encoded bit vector, in which each bit represents a fractional value. The packet size is multiplied by the fractional value if the corresponding bit in the bit vector is set (e.g., bit set to binary "1" in some implementations, and to binary "0" in other implementations). FIGS. 5A and 5B illustrate example patterns 500A and 500B, respectively, of a bit vector 500 used in an example power credit management scheme by an electronic device. In some implementations, the bit vector 500 is used to represent the weight value *weight*[i] in equation (3) in the power credit management scheme used by the electronic device 200, as described above.

As shown in FIGS. 5A and 5B, the bit vector 500 is an encoded 7-bit vector (an 8th bit is used to represent the sign for the encoding). However, other sizes of the bit vector 500 are possible depending on the implementation. Each bit represents a fractional value for the weight. In the examples illustrated by FIGS. 5A and 5B, bit 0 represents a weight value of 1/64 (W = 1/64); bit 1 represents a weight value of 1/32 (W = 1/32); bit 2 represents a weight value of 1/16 (W = 1/16); bit 3 represents a weight value of 1/8 (W = 1/8); bit 4 represents a weight value of 1/4 (W = 1/4); bit 5 represents a weight value of 1/2 (W = 1/2); and bit 6 represents a weight value of 1 (W = 1). Different implementations can use other suitable integer or fractional values for the weights.

FIG. 5A shows a pattern 500A in which bit 6 of the bit vector 500 is set (in this example, a bit being set is indicated by binary "1" and a bit being unset or cleared is indicated by binary "0", but the reverse are also possible depending on the implementation). Accordingly, when the bit vector with pattern 500A is applied, the packet size is multiplied by a weight of 1, resulting in a transmission tax that is equal to the packet size. In doing so, the packet size is effectively doubled, causing the throughput to reduce by half.

In some cases, more than one bit in the bit vector can be set, and the weight applied is a multiplicative value of the corresponding individual weight values. For example, FIG. 5B shows a pattern 500B in which bits 5 and 4 of the bit vector 500 are set. Accordingly, when the bit vector with pattern 500B is applied, the packet size is multiplied by weights of ½ and ¼, which equals 1/8 or 0.125 (½ * ¼), resulting in a transmission tax that is equal to the (0.125**packet_size*). In this case, the applied weight is a fractional value, and the transmission tax is a fraction of the packet size.

In some implementations, the configuration of the bit vector 500 is different for different OREs. For example, for lower alert operating states, such as ORE1, lower weights can be used for lower transmission tax, to allow higher data throughputs. In contrast, for higher alert states, such as ORE3, higher weights can be used for higher transmission tax, to limit the data throughput. To illustrate, for ORE1, bit 1 can be set in some cases, thereby setting the weight to a value of 1/32. In contrast, for ORE2, bit 2 can be set, which sets the weight to a value of 1/16, and for ORE3, bit 3 can be set, setting the weight to a value of 1/8.

Equation (3) shows that, by adding a transmission tax corresponding to a weighted size of the packet, packets of larger sizes are penalized. This is because processing smaller packet sizes consume less power, as smaller packet sizes require less time to determine a number of segments or cells of the packet, compared to larger packet sizes. The smaller power consumption for the smaller packet sizes are accordingly reflected in a smaller *credit_reduction_amount*, that is, a smaller number of power credits used to forward such packets.

Returning to FIG. 4, an ingress arbiter performs operations of the credit update resolution component 415 to determine if there are power credits available to the ingress arbiter to forward a packet. By performing the credit update resolution 415 operations, the ingress arbiter computes an *updated_credit_balance* as shown by equation (4):

$$updated\_credit\_balance = total\_available\_power\_credits - credit\_reduction\_amount$$

(4)

The *updated credit balance* represents how many power credits will remain available to the ingress arbiter after the *credit_reduction_amount* number of power credits are used to forward the current packet, taking into account *the power credit amount* number of power credits that are replenished in the current refresh period (since *total_available_power_credits* is a sum of *power_credit_amount* added in the refresh period and the pre-existing *credit balance,* as shown by equation (2)).

In some cases, the credit update resolution is performed as the ingress arbiter is in the process of forwarding one or more packets, based on the available credits from the previous iteration (indicated by *credit_balance*). In such cases, the *updated_credit_balance* determined using equation (4) may not reflect the latest value of *credit_balance,* as the ingress arbiter will have consumed, at or around the same time the credit resolution update is performed, a *credit_reduction_amount* of credits to forward the one or more packets. Accordingly, the *updated credit balance* may reflect a value that is greater than the actual number of power credits available. When the credit update controller 420 makes forwarding decisions, as described below, based on this *updated credit balance* value, the actual number of credits available may become negative (e.g., if all the *updated credit balance* number of credits are used, which is less than the actual number of available credits). The discrepancy is determined during the next credit resolution update cycle, when the *credit_balance* is determined to be negative. Further packet forwarding by the ingress arbiter is paused until a sufficient number of credits are added back to make the *updated_credit_balance* become non-negative.

The *updated_credit_balance* is a signed value, which can be negative in some cases. This can be the case, for example, if the number of power credits used to advance the current packet is greater than the number of power credits available to the ingress arbiter. The computation result of equation (4) is forwarded to the credit update controller 420.

The ingress arbiter uses the operations of the credit update controller 420 to determine if one or more packets can be forwarded to the associated ingress packet processor. For example, if the *updated_credit_balance* is a positive or zero value, the credit update controller 420 operations determine that there is at least enough power credits available to the ingress arbiter as the number of power credits used to forward the queued packets to the ingress packet processor. In such cases, the packets are determined to be *transmission_eligible,* which indicates that the ingress arbiter can forward the packets without exceeding the target throughput for the present ORE. Accordingly, the ingress arbiter proceeds to forward the packets to the associated ingress packet processor. Once the EOP cell of a packet has been forwarded by the ingress arbiter, the credit update controller 420 removes a *credit_reduction_amount* number power credits from the total power credits available. On the other hand, if the *updated_credit_balance* is a negative value, the credit update controller 420 operations determine that not enough power credits are available to the ingress arbiter to forward the packets. In such cases, the packets are not deemed to be *transmission_eligible.* The logic instructs the scheduler to not schedule any packets, and the ingress arbiter holds the packets in the queue until the next refresh period, at which time it performs the above operations again to determine if the packets can be forwarded.

In the above manner, using the power credit management scheme 400, the electronic device 200 controls the data forwarding rate based on packet sizes and the present ORE. In doing so, the electronic device 200 determines how much data can be processed by the device pipeline, consequently managing the throughput. This results in limiting the power consumption by the device pipeline, and a corresponding limiting in the device current.

As noted previously, in some implementations, adjustments to the data forwarding rate of the electronic device 200 is performed by egress logic, e.g., egress arbiters coupled to the packet processors 208a, 208b and 208c. In some cases, a suitable combination of the ingress arbiters and the egress arbiters are configured to control the data forwarding rate of the electronic device 200 based on the operating state of the device. This can lead to improvements in overall power management.

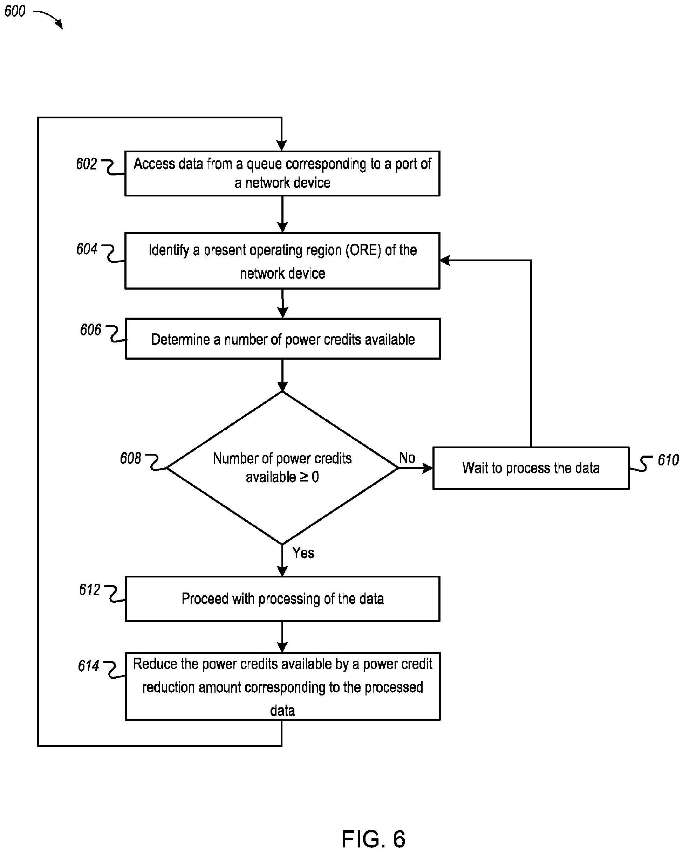

FIG. 6 illustrates an example process 600 employed by an electronic device to manage power consumption by the device. In some implementations, the process 600 is performed by the electronic device 200 or the electronic device 100 to regulate power consumption by controlling the rates at which ingress arbiters forward data (in packets) to the corresponding ingress packet processors. Accordingly, the following sections describe the process 600 as being performed by the electronic device 200. However, in other implementations, the process 600 may be performed by other systems or devices, e.g., other types of network switches.

The process 600 starts when the electronic device accesses data from a queue corresponding to a port of a network device (602). For example, ingress arbiter 203a (or ingress arbiter 203b or 203c, as applicable) dequeues, from an ingress buffer associated with one of the ingress ports 202a1 or 202a2, a packets corresponding to data to be forwarded to the ingress packet processor 202a.

The process 600 continues with the electronic device identifying a present operating region (ORE) of the network device (604). For example, the electronic device 200 measures the junction temperature $T_j$ and/or the device current $I_{dd}$, and compares the measured values to the ranges for $T_j$ and $I_{dd}$, respectively, specified for ORE1, ORE2, and ORE3. The electronic device 200 determines which of these specified ranges cover the measured values for the respective device attributes and/or environmental factors, and accordingly determines the present ORE of the device, as described with respect to FIG. 3. This information is made available to the ingress arbiter 202a.

The electronic device determines a number of power credits available (606). For example, the ingress arbiter 203a determines the total available power credits to forward packets using the power credit management scheme 400, for example, based on the *power_credit_amount* number of power credits replenished in a refresh period and the power credits available to the ingress arbiter (indicated by *credit_balance*), as described with respect to equations (1) and (2).

The electronic device determines if the number of power credits available is greater than or equal to zero (608). For example, the ingress arbiter 203a determines, using the power credit management scheme 400, the power credits available to the ingress arbiter to forward the accessed packet to the ingress packet processor 202a. The ingress arbiter 203a computes the *updated_credit_balance,* as described with respect to equation (4), and checks if the *updated_credit_balance* value is non-negative.

If the electronic device determines that the number of power credits available is negative, then the electronic device waits to process the data (610). For example, upon computing a negative value for the *updated_credit_balance* as described previously, the ingress arbiter 203a holds the packet in the queue until the next refresh period, at which time it performs the power credit management scheme 400 operations again to determine if the data can be forwarded. In some cases, the operating state of the electronic device 200 can change in the intervening time period, e.g., due to external factors or packet processing by the device pipeline. Accordingly, the present ORE is again determined when the ingress arbiter attempts again to forward the data.

On the other hand, if the electronic device determines that the number of power credits available is greater than or equal to zero, then the electronic device proceeds with processing of the data (612). For example, upon computing a non-negative value for the *updated_credit_balance,* the ingress arbiter 203a determines that the packet is *transmission_eligible,* and proceeds to forward the packet to the ingress packet processor 202a.

Upon processing the data, the electronic device reduces the power credits available by a power credit reduction amount corresponding to the processed data (614). For example, the ingress arbiter 203a determines, using the power credit management scheme 400, a *credit_reduction_amount* number of power credits used to forward the packet to the ingress packet processor 202a, as described with respect to equation (3). Upon sending the EOP cell of the packet, the ingress arbiter 202a removes a *credit_reduction_amount* number power credits from the total power credits available as the cost for forwarding the packet. The ingress arbiter then accesses another packet corresponding to the data from an ingress port queue, and performs the process 600 to determine if the packet can be forwarded to the ingress packet processor.

In the above manner, the electronic device 200 controls data forwarding rates to control the throughput of the device pipeline, such that power consumption by the device can be regulated.

The processes and logic flows described in this document can be performed by one or more programmable processors executing one or more computer programs to perform the functions described herein. The processes and logic flows can also be performed by, and apparatus can also be implemented as, special purpose logic circuitry, e.g., a field programmable gate array (FPGA) or an ASIC.

The processes and logic flows described in this document can be extended to multi-die systems, in which multiple devices are interconnected, often in the same package, to yield a denser switching element with increased input/output (I/O) and switching capacity. The current and/or temperature can be monitored across the various devices, with policies for data rate processing and/or packet or cell rate processing applied to the various devices based on the combined operating state of the devices.

Processors suitable for the execution of a computer program include, by way of example, both general and special purpose microprocessors, and any one or more processors of any kind of digital computer. Generally, a processor will receive instructions and data from a read only memory or a random access memory or both.

While this document may describe many specifics, these should not be construed as limitations on the scope of an invention that is claimed or of what may be claimed, but rather as descriptions of features specific to particular embodiments. Certain features that are described in this document in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination in some cases can be excised from the combination, and the claimed combination may be directed to a sub-combination or a variation of a sub-combination. Similarly, while operations are depicted in the drawings in a particular order, this should not be understood as requiring that such operations be performed in the particular order shown or in sequential order, or that all illustrated operations be performed, to achieve desirable results.

Only a few examples and implementations are disclosed. Variations, modifications, and enhancements to the described examples and implementations and other implementations can be made based on what is disclosed.

**The following is a list of further preferred embodiments of the invention:**

Embodiment 1. A method performed by a network device, the method comprising: accessing, from a queue corresponding to a port of the network device, a packet for processing;

identifying a present operating region (ORE) of the network device, wherein one or more OREs are specified for the network device, an ORE of the one or more OREs associated with at least one of (i) one or more device attributes of the network device, or (ii) one or more environmental factors associated with an environment in which the network device is operable;

determining a number of power credits available for processing one or more packets;

in response to determining that the number of power credits available is non-negative, completing processing of the packet;

computing, based at least on the present ORE of the network device, a power credit reduction for the packet, the power credit reduction corresponding to an amount of power for processing the packet; and

reducing the number of power credits available by the power credit reduction for the packet.

Embodiment 2. The method of embodiment 1, wherein computing the power credit reduction for the packet comprises:

selecting, based at least on the size of the packet, a particular weight value of a plurality of weight values;

determining a weighted size of the packet based on the size of the packet and the particular weight value;

computing the amount of power for processing the packet as a function of the weighted size of the packet; and

determining the power credit reduction for the packet corresponding to the computed amount of power for processing the packet.

Embodiment 3. The method of embodiment 2, wherein selection of the particular weight value is further based on the present ORE of the network device, wherein the one or more OREs specified for the network device are associated with respective plurality of weight values.

Embodiment 4. The method of embodiment 2, wherein selecting the particular weight value based at least on the size of the packet comprises:

determining the size of the packet to be one of a first size or a second size, the first size being greater than the second size;

upon determining that the size of the packet is the first size, selecting a first weight value of the plurality of weight values as the particular weight value; and

upon determining that the size of the packet is the second size, selecting a second weight value of the plurality of weight values as the particular weight value,

wherein the first weight value is greater than the second weight value.

Embodiment 5. The method of embodiment 2, wherein the plurality of weight values correspond to a plurality of packet size ranges, each weight value of the plurality of weight values associated with a different packet size range of the plurality of packet size ranges,
wherein selecting the particular weight value based at least on the size of the packet comprises:

comparing the size of the packet to the plurality of packet size ranges;

in response to the comparing, determining a particular packet size range of the plurality of packet size ranges corresponding to the size of the packet; and

identifying a weight value of the plurality of weight values associated with the particular packet size range as the particular weight value.

Embodiment 6. The method of embodiment 5, wherein determining the weighted size of the packet based on the size of the packet and the particular weight value comprises multiplying the size of the packet by a bit vector, each bit in the bit vector corresponding to a different weight parameter, the method further comprising:

determining one or more weight parameters that correspond to the particular weight value in combination;

identifying one or more bits in the bit vector corresponding to the determined one or more weight parameters;

configuring the bit vector by setting the identified one or more bits in the bit vector; and multiplying the size of the packet by the configured bit vector to determine the weighted size of the packet.

Embodiment 7. The method of embodiment 1, further comprising:

generating a particular number of power credits upon expiry of a specified time period; and

increasing the number of power credits available by the particular number of power credits generated.

Embodiment 8. The method of embodiment 7, wherein generating the particular number of power credits is based on the present ORE of the network device, wherein the one or more OREs specified for the network device are associated with different numbers of power credits.

Embodiment 9. The method of embodiment 8, further comprising determining a first number of power credits for a first ORE of the one or more OREs, comprising:

determining a target data throughput rate for the network device when operating in the first ORE; and

computing the first number of power credits for the first ORE based at least on the target data throughput rate in the first ORE.

Embodiment 10. The method of embodiment 9, further comprising:
computing the first number of power credits for the first ORE as a function of the target data throughput rate in the first ORE and the specified time period.

Embodiment 11. The method of embodiment 1, further comprising: accessing, from the queue, a second packet for processing;

determining a remaining number of power credits available; and

in response to determining that the remaining number of power credits available is negative, aborting processing of the second packet.

Embodiment 12. The method of embodiment 1, wherein the network device is a network switch,

wherein accessing the packet for processing from the queue corresponding to the port of the network device comprises accessing, by an ingress arbiter of the network device, the packet from an ingress queue corresponding to an ingress port of the network device,

wherein completing processing of the packet comprises transmitting cells corresponding to the packet to an ingress packet processor of the network device associated with the ingress arbiter, and

wherein reducing the number of power credits available by the power credit reduction for the packet comprises reducing the number of power credits available by the power credit reduction for the packet following transmission of an end of packet (EOP) cell corresponding to the packet.

Embodiment 13. The method of embodiment 1, wherein the network device is an Ethernet switch, and wherein determining the size of the packet comprises determining the size of the packet as an aggregate of a physical packet size, an inter-packet gap (IPG), and a preamble.

Embodiment 14. The method of embodiment 1, wherein accessing the packet from the queue comprises accessing one or more cells corresponding to the packet from the queue, and
wherein determining the size of the packet comprises:

obtaining an end-of-packet (EOP) cell corresponding to the packet from the queue; and

determining the size of the packet upon obtaining the EOP cell.

Embodiment 15. The method of embodiment 1, wherein the one or more device attributes of the network device include device current, and
wherein the one or more environmental factors include one or more of a device junction temperature, an ambient temperature, or a temperature of a device enclosure.

Embodiment 16. A network device, comprising:

a plurality of ports for receiving packet data;

one or more processors; and

one or more machine-readable media storing instructions that, when executed, are configured to cause the one or more processors to perform operations comprising:

accessing, from a queue corresponding to a port of the plurality of ports, a packet for processing;

identifying a present operating region (ORE) of the network device, wherein one or more OREs are specified for the network device, an ORE of the one or more OREs associated with at least one of (i) one or more device attributes of the network device, or (ii) one or more environmental factors associated with an environment in which the network device is operable;

determining a number of power credits available for processing one or more packets;

in response to determining that the number of power credits available is non-negative, completing processing of the packet;

computing, based at least on the present ORE of the network device, a power credit reduction for the packet, the power credit reduction corresponding to an amount of power for processing the packet; and

reducing the number of power credits available by the power credit reduction for the packet.

Embodiment 17. The network device of embodiment 16, wherein computing the power credit reduction for the packet comprises:

selecting, based at least on the size of the packet, a particular weight value of a plurality of weight values;

determining a weighted size of the packet based on the size of the packet and the particular weight value;

computing the amount of power for processing the packet as a function of the weighted size of the packet; and

determining the power credit reduction for the packet corresponding to the computed amount of power for processing the packet.

Embodiment 18. The network device of embodiment 17, wherein selection of the particular weight value is further based on the present ORE of the network device, wherein the one or more OREs specified for the network device are associated with respective plurality of weight values.

Embodiment 19. The network device of embodiment 17, wherein selecting the particular weight value based at least on the size of the packet comprises:

determining the size of the packet to be one of a first size or a second size, the first size being greater than the second size;

upon determining that the size of the packet is the first size, selecting a first weight value of the plurality of weight values as the particular weight value; and

upon determining that the size of the packet is the second size, selecting a second weight value of the plurality of weight values as the particular weight value,

wherein the first weight value is greater than the second weight value.

Embodiment 20. The network device of embodiment 17, wherein the plurality of weight values correspond to a plurality of packet size ranges, each weight value of the plurality of weight values associated with a different packet size range of the plurality of packet size ranges,
wherein selecting the particular weight value based at least on the size of the packet comprises:

comparing the size of the packet to the plurality of packet size ranges;

in response to the comparing, determining a particular packet size range of the plurality of packet size ranges corresponding to the size of the packet; and

identifying a weight value of the plurality of weight values associated with the particular packet size range as the particular weight value.

Embodiment 21. The network device of embodiment 20, wherein determining the weighted size of the packet based on the size of the packet and the particular weight value comprises multiplying the size of the packet by a bit vector, each bit in the bit vector corresponding to a different weight parameter, the operations further comprising:

determining one or more weight parameters that correspond to the particular weight value in combination;

identifying one or more bits in the bit vector corresponding to the determined one or more weight parameters;

configuring the bit vector by setting the identified one or more bits in the bit vector; and

multiplying the size of the packet by the configured bit vector to determine the weighted size of the packet.

Embodiment 22. The network device of embodiment 16, the operations further comprising:

generating a particular number of power credits upon expiry of a specified time period; and

increasing the number of power credits available by the particular number of power credits generated.

Embodiment 23. The network device of embodiment 22, wherein generating the particular number of power credits is based on the present ORE of the network device, wherein the one or more OREs specified for the network device are associated with different numbers of power credits.

Embodiment 24. The network device of embodiment 23, wherein the operations further comprise determining a first number of power credits for a first ORE of the one or more OREs, comprising:

determining a target data throughput rate for the network device when operating in the first ORE; and

computing the first number of power credits for the first ORE based at least on the target data throughput rate in the first ORE.

Embodiment 25. The network device of embodiment 24, the operations further comprising:
computing the first number of power credits for the first ORE as a function of the target data throughput rate in the first ORE and the specified time period.

Embodiment 26. The network device of embodiment 16, the operations further comprising:

accessing, from the queue, a second packet for processing;

determining a remaining number of power credits available; and

in response to determining that the remaining number of power credits available is negative, aborting processing of the second packet.

Embodiment 27. The network device of embodiment 16,

wherein the network device is a network switch, wherein accessing the packet for processing from the queue corresponding to the port of the network device comprises accessing, by an ingress arbiter of the network device, the packet from an ingress queue corresponding to an ingress port of the network device,

wherein completing processing of the packet comprises transmitting cells corresponding to the packet to an ingress packet processor of the network device associated with the ingress arbiter, and

wherein reducing the number of power credits available by the power credit reduction for the packet comprises reducing the number of power credits available by the power credit reduction for the packet following transmission of an end of packet (EOP) cell corresponding to the packet.

Embodiment 28. The network device of embodiment 16, wherein the network device is an Ethernet switch, and wherein determining the size of the packet comprises determining the size of the packet as an aggregate of a physical packet size, an inter-packet gap (IPG), and a preamble.

Embodiment 29. The network device of embodiment 16, wherein accessing the packet from the queue comprises accessing one or more cells corresponding to the packet from the queue, and
wherein determining the size of the packet comprises:

obtaining an end-of-packet (EOP) cell corresponding to the packet from the queue; and

determining the size of the packet upon obtaining the EOP cell.

Embodiment 30. The network device of embodiment 16, wherein the one or more device attributes of the network device include device current, and
wherein the one or more environmental factors include one or more of a device junction temperature, an ambient temperature, or a temperature of a device enclosure.

**Claims**

1. A method performed by a network device, the method comprising:

accessing, from a queue corresponding to a port of the network device, a packet for processing;
identifying a present operating region (ORE) of the network device, wherein one or more OREs are specified for the network device, wherein each ORE specifies one or more respective acceptable ranges for one or more device parameters for the network device, the one or more device parameters including at least one of (i) one or more device attributes of the network device, or (ii) one or more environmental factors associated with an environment in which the network device is operable;
determining a number of power credits available for processing one or more packets, each power credit representing an amount of power to be consumed by the network device to process a particular amount of data;
in response to determining that the number of power credits available is non-negative, completing processing of the packet;
computing, based at least on the present ORE of the network device, a power credit reduction for the packet, the power credit reduction corresponding to an amount of power for processing the packet; and
reducing the number of power credits available by the power credit reduction for the packet.

2. The method of claim 1, wherein computing the power credit reduction for the packet comprises:

   selecting, based at least on the size of the packet, a particular weight value of a plurality of weight values;
   determining a weighted size of the packet based on the size of the packet and the particular weight value;
   computing the amount of power for processing the packet as a function of the weighted size of the packet; and
   determining the power credit reduction for the packet corresponding to the computed amount of power for processing the packet.

3. The method of claim 2, wherein selection of the particular weight value is further based on the present ORE of the network device, wherein the one or more OREs specified for the network device are associated with respective plurality of weight values.

4. The method of claim 2, wherein selecting the particular weight value based at least on the size of the packet comprises:

   determining the size of the packet to be one of a first size or a second size, the first size being greater than the second size;
   upon determining that the size of the packet is the first size, selecting a first weight value of the plurality of weight values as the particular weight value; and
   upon determining that the size of the packet is the second size, selecting a second weight value of the plurality of weight values as the particular weight value,
   wherein the first weight value is greater than the second weight value.

5. The method of claim 2, wherein the plurality of weight values correspond to a plurality of packet size ranges, each weight value of the plurality of weight values associated with a different packet size range of the plurality of packet size ranges,
   wherein selecting the particular weight value based at least on the size of the packet comprises:

   comparing the size of the packet to the plurality of packet size ranges;
   in response to the comparing, determining a particular packet size range of the plurality of packet size ranges corresponding to the size of the packet; and
   identifying a weight value of the plurality of weight values associated with the particular packet size range as the particular weight value.

6. The method of claim 5, wherein determining the weighted size of the packet based on the size of the packet and the particular weight value comprises multiplying the size of the packet by a bit vector, each bit in the bit vector corresponding to a different weight parameter, the method further comprising:

   determining one or more weight parameters that correspond to the particular weight value in combination;
   identifying one or more bits in the bit vector corresponding to the determined one or more weight parameters;
   configuring the bit vector by setting the identified one or more bits in the bit vector; and
   multiplying the size of the packet by the configured bit vector to determine the weighted size of the packet.

7. The method of any of claims 1-6, further comprising:

   generating a particular number of power credits upon expiry of a specified time period; and
   increasing the number of power credits available by the particular number of power credits generated.

8. The method of claim 7, wherein generating the particular number of power credits is based on the present ORE of the network device, wherein the one or more OREs specified for the network device are associated with different numbers of power credits.

9. The method of claim 8, further comprising determining a first number of power credits for a first ORE of the one or more OREs, comprising:

  determining a target data throughput rate for the network device when operating in the first ORE; and
  computing the first number of power credits for the first ORE based at least on the target data throughput rate in the first ORE.

10. The method of claim 9, further comprising:
  computing the first number of power credits for the first ORE as a function of the target data throughput rate in the first ORE and the specified time period.

11. The method of any of claims 1-10, further comprising:

  accessing, from the queue, a second packet for processing;
  determining a remaining number of power credits available; and
  in response to determining that the remaining number of power credits available is negative, aborting processing of the second packet.

12. The method of any of claims 1-11, wherein the network device is a network switch,

  wherein accessing the packet for processing from the queue corresponding to the port of the network device comprises accessing, by an ingress arbiter of the network device, the packet from an ingress queue corresponding to an ingress port of the network device,
  wherein completing processing of the packet comprises transmitting cells corresponding to the packet to an ingress packet processor of the network device associated with the ingress arbiter, and
  wherein reducing the number of power credits available by the power credit reduction for the packet comprises reducing the number of power credits available by the power credit reduction for the packet following transmission of an end of packet (EOP) cell corresponding to the packet.

13. The method of any of claims 1-12, wherein the network device is an Ethernet switch, and wherein determining the size of the packet comprises determining the size of the packet as an aggregate of a physical packet size, an inter-packet gap (IPG), and a preamble.

14. The method of any of claims 1-13, wherein the one or more device attributes of the network device include device current, and
  wherein the one or more environmental factors include one or more of a device junction temperature, an ambient temperature, or a temperature of a device enclosure.

15. A network device, comprising:

  a plurality of ports for receiving packet data; and
  one or more processors configured to perform the methods of any of claims 1-14.

Device 100

Port 102a1 → | Ingress Arbiter 103a | → | Ingress Packet Processor 102a |
Port 102a2 →

Port 102b1 → | Ingress Arbiter 103b | → | Ingress Packet Processor 102b |
Port 102b2 →

Port 102c1 → | Ingress Arbiter 103c | → | Ingress Packet Processor 102c |
Port 102c2 →

Crossbar 104

Traffic Manager 106a
106a1
106a2

Traffic Manager 106b
106b1
106b2

Traffic Manager 106c
106c1
106c2

Egress Packet Processor 108a → Transmit Buffer 109a → Port 108a1 / Port 108a2

Egress Packet Processor 108b → Transmit Buffer 109b → Port 108b1 / Port 108b2

Egress Packet Processor 108c → Transmit Buffer 109c → Port 108c1 / Port 108c2

FIG. 1

**FIG. 2**

300

| |
|---|
| **306** — Operating Region 3 (ORE3)<br>($T_j >= 60C$ **OR** $I_{dd} >= 75A$) |
| **304** — Operating Region 2 (ORE2)<br>($50C <= T_j < 60C$ **OR** $65A <= I_{dd} < 75A$) |
| **302** — Operating Region 1 (ORE1)<br>($T_j < 50C$ **AND** $I_{dd} < 65A$) |

FIG. 3

FIG. 4

500A

W = 1 | 0 | 0 | 0 | 0 | 0 | 1

W=1/64  W=1/32  W=1/16  W=1/8  W=1/4  W=1/2  W=1

500

W: Weight

**FIG. 5A**

500B

W = 1 | 0 | 0 | 0 | 1 | 1 | 0

W=1/64  W=1/32  W=1/16  W=1/8  W=1/4  W=1/2  W=1

500

W: Weight

**FIG. 5B**

600 —

| 602 | Access data from a queue corresponding to a port of a network device |
| 604 | Identify a present operating region (ORE) of the network device |
| 606 | Determine a number of power credits available |

608 — Number of power credits available ≥ 0

No → 610 Wait to process the data

Yes

| 612 | Proceed with processing of the data |
| 614 | Reduce the power credits available by a power credit reduction amount corresponding to the processed data |

FIG. 6

Europäisches
Patentamt

European
Patent Office

Office européen
des brevets

**EUROPEAN SEARCH REPORT**

Application Number

EP 23 17 3546

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2016/039671 A2 (ERICSSON TELEFON AB L M [SE]) 17 March 2016 (2016-03-17) <br> * paragraph [0005]; figures 1,6 * <br> * paragraph [0018] * <br> * paragraph [0042] * <br> * paragraph [0043] * | 1-15 | INV. H04W40/10 |
| X <br> A | US 11 159 455 B1 (MATTHEWS WILLIAM BRAD [US] ET AL) 26 October 2021 (2021-10-26) <br> * column 1, line 15 - column 2, line 40 * | 1,15 <br> 2-14 | |
| A | REYHANIAN NAVID ET AL: "Energy-Aware Scheduling for Broadcast Erasure Channels With Two Energy Harvesting Receivers", IEEE TRANSACTIONS ON GREEN COMMUNICATIONS AND NETWORKING, IEEE, vol. 4, no. 4, 22 May 2020 (2020-05-22), pages 1174-1187, XP011821305, DOI: 10.1109/TGCN.2020.2996670 [retrieved on 2020-11-19] <br> * paragraph [SectionII"Systemmodel"] * | 1-15 | |

TECHNICAL FIELDS SEARCHED (IPC)

H04W

The present search report has been drawn up for all claims

| Place of search | Date of completion of the search | Examiner |
|---|---|---|
| The Hague | 9 October 2023 | Ciurel, Cristian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 17 3546

This annex lists the patent family members relating to the patent documents cited in the above-mentioned European search report.
The members are as contained in the European Patent Office EDP file on
The European Patent Office is in no way liable for these particulars which are merely given for the purpose of information.

09-10-2023

| Patent document cited in search report | | Publication date | Patent family member(s) | | Publication date |
|---|---|---|---|---|---|
| WO 2016039671 | A2 | 17-03-2016 | EP  3192211 | A2 | 19-07-2017 |
| | | | US  2018241650 | A1 | 23-08-2018 |
| | | | WO  2016039671 | A2 | 17-03-2016 |
| US 11159455 | B1 | 26-10-2021 | US  11159455 | B1 | 26-10-2021 |
| | | | US  11171890 | B1 | 09-11-2021 |
| | | | US  11570127 | B1 | 31-01-2023 |

EPO FORM P0459

For more details about this annex : see Official Journal of the European Patent Office, No. 12/82